# EUROPÄISCHE PATENTSCHRIFT

(11) **EP 2 788 138 B1**
(45) Veröffentlichungstag und Bekanntmachung des Hinweises auf die Patenterteilung: **23.09.2020**
(21) Anmeldenummer: 12822962.2
(22) Anmeldetag: 08.11.2012
(51) Int. Cl.: B23D 21/06, B23D 33/10, B26D 3/16

(54) **VORRICHTUNG ZUM ABLÄNGEN VON WELLROHREN**
APPARATUS FOR CUTTING CORRUGATED PIPES TO LENGTH
DISPOSITIF DE MISE À LONGUEUR DE TUBES ONDULÉS

(30) Priorität: 05.12.2011 DE 102011056040
(43) Veröffentlichungstag der Anmeldung: 15.10.2014
(73) Patentinhaber: Rothenberger AG, 65779 Kelkheim (DE)
(72) Erfinder: KRAUSE, Thoralf, 04357 Leipzig (DE); GREDING, Arnd, 65719 Hofheim (DE)
(74) Vertreter: Launhardt, Thomas
(86) Internationale Anmeldenummer: PCT/DE2012/100343
(87) Internationale Veröffentlichungsnummer: WO 2013/083119

(56) Entgegenhaltungen:
- CH-A5- 682 471
- DE-U1- 29 501 197
- JP-A- H02 256 414
- US-A1- 2010 199 499

## Beschreibung

Die Erfindung betrifft eine Vorrichtung zum Ablängen von Wellrohren mit einer radial bezüglich einer Achse wirkenden Spanneinrichtung zum Fixieren eines Wellrohres in einer Bearbeitungsposition und mit einem Schneidwerkzeug, welches in der Bearbeitungsposition gegen das Wellrohr in Wirkstellung gebracht ist oder bringbar ist, so dass durch Bewegen von Schneidwerkzeug und Wellrohr relativ zueinander ein Trennen bewirkt wird.

Vorrichtungen der hier angesprochenen Art, welche auch als Wellrohrschneider bezeichnet werden, dienen zum Trennen von gewelltem Rohr, dem sogenannten Wellrohr. Ein solches Wellrohr ist ein Umdrehungskörper mit kreisrundem oder anderem Querschnitt, dessen Wand im Wesentlichen sinusförmige Wellungen mit gleichmäßigem oder ungleichmäßigem Profil aufweisen.

Wellrohre kommen immer öfter in der Solarthermie zum Einsatz und dienen dort beispielsweise als Wärmeüberträger. Denn aufgrund ihrer gewellten Struktur weisen die Wellrohre eine relativ große Oberfläche auf und begünstigen damit den Wärmetransport. Die Wellrohre kommen auch in der Heizungs- und Sanitärtechnik sowie in diversen Industrieanwendungen zum Einsatz.

Vorrichtungen zum Ablängen von Wellrohren weisen üblicherweise eine Spanneinrichtung auf, mittels welcher das abzulängende Wellrohr in einer Bearbeitungsposition geklemmt gehalten wird. Das Ablängen des Wellrohres erfolgt dann mittels eines Schneidrades, welches in der Bearbeitungsposition gegen das Wellrohr in Wirkstellung gebracht ist, so dass durch Bewegen des Schneidrades um das Wellrohr ein Trennen bewirkt wird.

Eine solche Vorrichtung ist aus dem Produktkatalog der Rothenberger Werkzeuge GmbH (Hauptkatalog 2008, Seiten 112 und 113) bekannt. Die Vorrichtung bzw. der Rohrabschneider ist dort zum Trennen von ungewelltem Rohr beschrieben, wenngleich sie auch zum Ablängen von Wellrohr geeignet ist.

Es hat sich gezeigt, dass das Schneidwerkzeug bei der um das Wellrohr herumgeführten Schneidbewegung von seiner angesetzten Position an dem Wellrohr seitlich wegrutscht, wenn das Schneidwerkzeug auf der Spitze bzw. dem Scheitel einer Welle oder an einer Flanke einer Welle angesetzt wird. Die Folge davon ist, dass die Trennkante über den Umfang des Wellrohres in axialer Richtung bezüglich der Rohrachse ungleichförmig verläuft.

Eine derartig verlaufende Trennkante erschwert das Anbinden des Wellrohres in ein Rohrleitungssystem oder an etwaigen Anschlussstücken und führt zu Undichtigkeiten mit der Folge von ungewollten Strömungsturbulenzen innerhalb des Rohres.

Die DE 601 00 137 T2 beschreibt eine Möglichkeit, mittels welcher ein Wellrohr entlang eines Wellenscheitels geschnitten werden kann, ohne dass es zu einem seitlichen Abrutschen des Schneidwerkzeuges beim Trennvorgang kommt. Es ist dort ein Rohrabschneider beschrieben, welcher auf die Oberfläche eines zu schneidenden Wellrohres aufgedrückt wird und zwei in axialem Abstand bezüglich der Längsachse des Wellrohres angeordnete Vorsprünge aufweist, welche in zueinander benachbarte Wellentäler eingreifen. Zwischen den Vorsprüngen ist ein Schneidwerkzeug angeordnet, welches durch den Eingriff der Vorsprünge in die beiden Wellentäler an einen Wellenscheitel des Wellrohres angesetzt ist und bei der Schneidbewegung um das Rohr aufgrund des Eingriffs der Vorsprünge an dem Wellenscheitel verbleibt, ohne seitlich wegzurutschen.

Die Vorsprünge und das Schneidwerkzeug sind bei diesem bekannten Wellrohrabschneider in einer festen Anordnung zueinander. Es lassen sich dadurch lediglich Wellrohre schneiden, deren Wellen sich in Richtung der Rohrachse in gleicher Weise erstrecken. Auch ist der bekannte Wellrohrabschneider auf ein Ablängen der Wellrohre an einem jeweiligen Wellenscheitel festgelegt.

Eine Vorrichtung zum Ablängen von Wellrohren gemäß dem Oberbegriff des Anspruchs 1 ist aus der US 2010/199 499 A1 bekannt. Weitere Vorrichtungen zum Ablängen von Wellrohren sind aus der JP H02 256414 A und der CH 682 471 A5 bekannt.

Der Erfindung liegt die Aufgabe zugrunde, eine Vorrichtung zum Ablängen von Wellrohren mit den eingangs genannten Merkmalen bereit zu stellen, durch welche ein Wellrohr je nach Erfordernis am Wellengrund oder am Wellenscheitel, aber auch an einer Flanke einer Welle abgelängt werden kann. Darüber hinaus soll die Vorrichtung ein Ablängen von Wellrohren ermöglichen, welche zueinander unterschiedlich verlaufende Wellen in Richtung der Rohrachse aufweisen.

Die Aufgabe wird mit einer Vorrichtung zum Ablängen von Wellrohren gelöst, welche die Merkmale des Anspruches 1 aufweist. Vorteilhafte Ausgestaltungen der Erfindung ergeben sich aus den Unteransprüchen, der nachfolgenden Beschreibung und den Figuren.

Eine erfindungsgemäße Vorrichtung zum Ablängen von Wellrohren hat eine radial bezüglich einer Achse wirkende Spanneinrichtung zum Fixieren eines Wellrohres in einer Bearbeitungsposition, vorzugsweise indem die Spanneinrichtung gegen das Wellrohr umfangsseitig verspannend in Wirkstellung bringbar ist oder gebracht wird. Die Achse fällt bevorzugt mit der Rohrachse bzw. der Mittelachse des Wellrohres zusammen.

Die Vorrichtung hat ferner ein Schneidwerkzeug, welches in der Bearbeitungsposition gegen das Wellrohr in Wirkstellung gebracht ist oder bringbar ist, so dass durch Bewegen von Schneidwerkzeug und Wellrohr relativ zueinander ein Trennen bewirkt wird. Das Schneidwerkzeug kann in der Bearbeitungsposition gegen das Wellrohr in Wirkstellung derart gebracht sein oder bringbar sein, dass durch Verdrehen bzw. Drehen von Schneidwerkzeug und Wellrohr relativ gegeneinander um eine gemeinsame Drehachse ein Trennen bzw. ein Trennvorgang bewirkt wird. Beispielsweise kann durch Bewegen des Schneidwerkzeuges um das Wellrohr ein Trennen bewirkt werden. Das Schneidwerkzeug macht dazu bevorzugt eine Drehbewegung um eine Drehachse, welche mit der Mittelachse des Wellrohres zusammenfällt.

Die erfindungsgemäße Vorrichtung ist bezüglich der Spanneinrichtung und/oder der Betätigung des Schneidwerkzeuges bevorzugt handbetätigt bzw. handbetätigbar, um ein Ablängen der Wellrohre mit technisch geringem Aufwand in einfacher Weise vor Ort durchführen zu können. Selbstverständlich kann die Vorrichtung bezüglich der Spanneinrichtung und/oder der Betätigung des Schneidwerkzeuges auch motorisch, insbesondere elektromotorisch, betätigt sein.

Nach der Erfindung weist die Vorrichtung in ein Wellental des Wellrohres eingreifbare bzw. eingreifende Anschlagmittel auf, wobei der Abstand zwischen dem Schneidwerkzeug und den Anschlagmitteln in axialer Richtung bezüglich der Achse veränderbar ist.

Durch diese Maßnahme ist das Schneidwerkzeug je nach Erfordernis an einem Wellengrund, einem Wellenscheitel oder einer Wellenflanke einer Welle eines Wellrohres ansetzbar. Das Schneidwerkzeug ist bei der Trennbewegung zum Ablängen des Wellrohres in der jeweils angesetzten Position an dem Wellengrund, dem Wellenscheitel oder der Wellenflanke mittels der Anschlagmittel in axialer Richtung zwangsgeführt, so dass ein Durchtrennen des Wellrohres ohne Lageveränderung des Schneidwerkzeuges in Richtung der Achse vollzogen wird. Bei einem Trennen des Wellrohres an einem Wellenscheitel ist dadurch ein Abrutschen in das benachbarte Wellental im Zuge der Schneidbewegung, beispielsweise durch Bewegen des Schneidwerkzeuges um das Wellrohr, vermieden. Auch ist dadurch ein Trennen des Wellrohres an einer schräg ausgerichteten Flanke einer Welle möglich, ohne dass es im Zuge des Trennvorganges zu einem Abrutschen des Schneidwerkzeuges kommt.

Die Anschlagmittel nutzen die wellenförmige Kontur eines Wellenrohres, indem die Anschlagmittel in wenigstens eine, ein Wellental bildende Einschnürung des Wellenrohres eingreifen und somit die Außenkontur des Wellrohres in diesem Bereich in Anlage gegen die Anschlagmittel tritt. Es ist damit eine Positionierung des Wellrohres relativ gegenüber den Anschlagmitteln und zugleich relativ gegenüber dem Schneidwerkzeug in axialer Richtung bezüglich der Achse erreicht.

Durch die erfindungsgemäß vorgesehenen Anschlagmittel lassen sich Wellrohre am Wellengrund, am Wellenscheitel oder einer Flanke einer Welle mit einem zur Achse bzw. Längsachse des Wellrohres im Wesentlichen senkrechten Schnitt problemlos trennen, unabhängig von der Ausbildung der Wellenform des jeweiligen Wellrohres. Ein solcher Schnitt ist sowohl bei Wellrohren mit relativ großer axialer Ausdehnung einer jeweiligen Welle wie auch bei Wellrohren mit einer relativ geringen axialen Ausdehnung einer jeweiligen Welle möglich.

Auch ist durch die erfindungsgemäße Vorrichtung ein Schneiden eines Wellrohres möglich, bei dem die Wellenform sich in Richtung der Rohrachse ändert. Durch die Veränderbarkeit des Abstandes zwischen dem Schneidwerkzeug und den Anschlagmitteln in axialer Richtung ist eine individuelle Anpassung an die jeweils vorhandene Wellenform eines jeweiligen Wellrohres in flexibler Art und Weise möglich. Durch die Erfindung ist somit die Schnittlage in Bezug auf die Wellengeometrie eines zu trennenden Wellrohres veränderbar, insbesondere einstellbar.

Die Wellrohre können aus einem beliebigen Material bestehen. Die erfindungsgemäße Vorrichtung ist sowohl zum Ablängen von Wellrohren aus Kunststoff als auch zum Ablängen von Wellrohren aus Metall geeignet.

Nach der Erfindung ist es vorgesehen, dass die Anschlagmittel in ihrem Abstand gegenüber dem Schneidwerkzeug in axialer Richtung bezüglich der Achse veränderbar sind. Dadurch ist eine individuelle und flexible Anpassung an die jeweils vorhandene Wellenform eines jeweiligen Wellrohres in technisch einfacher Weise möglich. Die Schnittlage des Schneidwerkzeuges kann somit in technisch einfacher Weise in Bezug auf die Wellengeometrie des Wellenrohres eingestellt werden, indem dazu die Anschlagmittel in ihrer axialen Position bezüglich der Achse gezielt in eine angestrebte Anschlagsposition, beispielsweise gegen eine Flanke eines Wellentales des Wellrohres, gebracht werden.

Denkbar ist es, dass sowohl die Anschlagmittel als auch das Schneidwerkzeug in axialer Richtung bezüglich der Achse jeweils veränderbar sind. Bevorzugt ist der Abstand zwischen dem Schneidwerkzeug und den Anschlagmitteln in axialer Richtung bezüglich der Achse veränderbar, indem das Schneidwerkzeug und die Anschlagmittel in axialer Richtung bewegt werden oder indem die Anschlagmittel in axialer Richtung bewegt werden.

Es ist vorgesehen, dass bei fixiertem Wellrohr und/oder bei in die Wirkstellung an das Wellrohr gebrachtem Schneidwerkzeug die Anschlagmittel in ihrem Abstand gegenüber dem Schneidwerkzeug in axialer Richtung bezüglich der Achse veränderbar sind. Dadurch ist eine besonders einfache Handhabung der Anschlagmittel für den Benutzer der Vorrichtung ermöglicht. Das Wellrohr kann nämlich bezüglich des Schneidwerkzeuges in eine vorgegebene Position in axialer Richtung zuerst fixiert werden und es ist dem Benutzer dann noch die Möglichkeit gegeben, die Anschlagmittel in ihrem Abstand gegenüber dem Schneidwerkzeug in der Weise zu verändern, dass die Anschlagmittel in eine vorgegebene Anschlagposition gegenüber dem Wellrohr gebracht werden.

Es ist vorgesehen, dass die Anschlagmittel mit Stellmitteln zusammenwirken, durch welche die Anschlagmittel in ihrem Abstand gegenüber dem Schneidwerkzeug in axialer Richtung bezüglich der Achse einstellbar sind. Dadurch sind die Anschlagmittel mit einfacher Handhabung für den Benutzer in axialer Richtung bezüglich der Achse exakt in die vorgegebene Anschlagposition an dem Wellrohr zu bringen, um den angestrebten im Wesentlichen senkrechten Schnitt zur Rohrachse mittels des Schneidwerkzeuges unter Zwangsführung durch die Anschlagmittel auszuführen.

In technisch einfacher Weise lassen sich die Stellmittel realisieren, wenn nach einer Ausgestaltung der Erfindung die Stellmittel durch einen Schraubmechanismus gebildet sind, welcher vorzugsweise von außen betätigbar ist. Dadurch ist eine besonders bedienerfreundliche Einstellung der Anschlagmittel erreicht.

Nach der Erfindung hat die Vorrichtung einen, ein Griffteil aufweisenden Grundkörper. Ferner ist nach der Erfindung die Spanneinrichtung an dem Grundkörper angeordnet. Nach einer Ausgestaltung der Erfindung ist es vorgesehen, dass die Anschlagmittel an dem Grundkörper angeordnet sind. Auch diese Maßnahme zielt darauf ab, ein Ablängen des Wellrohres für den Benutzer mit einfacher Handhabung zu ermöglichen. Durch das Griffteil ist der Grundkörper von dem Benutzer zu ergreifen, vorzugsweise mit einer Hand zu ergreifen.

Indem die Anschlagmittel und die Spanneinrichtung an dem Grundkörper angeordnet sind, ergibt sich eine besonders einfache Handhabung. Durch Ergreifen des Griffteiles ist dadurch die gesamte erfindungsgemäße Vorrichtung in einer Hand zu halten, wodurch der Trennvorgang beim Ablängen des Wellrohres erheblich vereinfacht ist.

Nach einer weiteren Ausgestaltung der Erfindung ist es vorgesehen, dass die Anschlagmittel an dem Grundkörper in axialer Richtung bezüglich der Achse bewegbar gelagert sind. Hierdurch ist in technisch einfacher Weise ein Verstellmechanismus realisiert, durch welchen die Anschlagmittel in axialer Richtung relativ gegenüber dem Schneidwerkzeug bewegt werden können.

Nach der Erfindung ist es vorgesehen, dass die Anschlagmittel wenigstens eine Anschlagfläche aufweisen, welche in der Bearbeitungsposition gegen eine Flanke einer Welle des Wellrohres bringbar ist. Dadurch ist sichergestellt, dass die Anschlagmittel in eine axiale Richtung sicher in Anschlag gegen eine Flanke einer Welle des Wellrohres gebracht werden können und somit ein Abrutschen des Schneidwerkzeuges bei einer umlaufenden Schneidbewegung um das Wellrohr durch die von der Fläche erzeugte Zwangsführung vermieden ist.

Eine weitere Ausgestaltung der Erfindung besteht darin, dass die Anschlagmittel zwei Anschlagflächen aufweisen, welche in der Bearbeitungsposition wahlweise gegen zueinander entgegen gerichtete Flanken von Wellen, insbesondere benachbarter Wellen, bringbar sind. Hierdurch lassen sich die Anschlagmittel in der in ein Wellental eingegriffenen Position an dem Wellrohr mit jeweils einer der Flächen gegen eine Flanke in Anschlagposition bringen, wobei es sich bei den Flanken um zueinander entgegen gerichtete Flanken von Wellen handelt.

Es ist dadurch mittels der Anschlagmittel verhindert, dass das Schneidwerkzeug relativ gegenüber dem Wellrohr beim Schneidvorgang seitlich in die eine axiale Richtung wegrutschen kann, indem die eine der Anschlagflächen als Anschlag wirkt und als Zwangsführung für das Wellrohr im Zuge des Schneidvorganges dient. Sofern beim Ablängen des Wellrohres es zu einem Abrutschen des Schneidwerkzeuges in die andere axiale Richtung kommen kann, beispielsweise wenn das Schneidwerkzeug an einer entgegengesetzt zu dem vorherigen Schnitt ausgerichteten Flanke einer Welle angesetzt wird, kann mittels der anderen Anschlagsfläche ein seitliches Abrutschen verhindert werden, indem die andere Anschlagsfläche in Wirkkontakt an die entgegen gerichtete Flanke gebracht wird und dann im Zuge der Schneidbewegung als Zwangsführung dient.

Nach einer bevorzugten Ausgestaltung der Erfindung ist es vorgesehen, dass die Anschlagmittel durch einen nach außen stehenden Vorsprung eines als Stütze und/oder Führung für das Wellrohr dienenden Stütz- und/oder Führungselements gebildet ist, welches vorzugsweise axial bezüglich der Achse bewegbar ist. Es sind dadurch in einem Bauteil mehrere Funktionen bezüglich des Wellrohres vereint. Dem Stütz- und/oder Führungselement kommt neben seiner Stütz- bzw. Führungsfunktion hinsichtlich des Wellrohres zusätzlich auch die Funktion zu, mittels des Vorsprungs die erfindungsgemäßen Anschlagmittel zu bilden. Es ist dadurch eine hohe Funktionsintegrität mit einem einzigen Bauteil realisiert, wodurch Aufwand und Kosten gering gehalten werden. Durch das Stütz- bzw. Führungselement ergibt sich ein verbesserter Schneidvorgang mittels des Schneidwerkzeuges, da das Wellrohr durch das Stütz- bzw. Führungselement beim Trennvorgang gegen die wirkenden Schneidkräfte zusätzlich in radialer Richtung abgestützt bzw. geführt ist.

Es bietet sich an, dass das Stütz- und/oder Führungselement koaxial zu einem Spannelement der Spanneinrichtung angeordnet ist. Eine solche Anordnung ist in technisch einfacher Weise zu realisieren, da Spannelement und Stütz- bzw. Führungselement auf einer gemeinsamen Achse oder Welle angeordnet sein können. Insofern ist es in einfacher Weise möglich, Spannelement und Stütz- bzw. Führungselement jeweils drehbeweglich auf der gemeinsamen Achse oder Welle zu lagern, so dass sowohl durch das Stütz- bzw. Führungselement als auch durch das Spannelement eine Abrollbewegung relativ gegenüber dem Wellrohr in der Bearbeitungsposition ermöglicht ist. Dadurch kann eine im Zuge des Trennvorganges ausgeführte relative Verdrehbewegung von Wellrohr und den Spannelementen der Spanneinrichtung um die Mittelachse des Wellrohres für den Benutzer mit einer relativ geringen aufzubringenden Kraft ausgeführt werden.

Nach einer weiteren Ausgestaltung der Erfindung ist es vorgesehen, dass das Stütz- und/oder Führungselement auf einem Gewindebolzen drehbar gelagert ist, welcher zum Bewegen in axialer Richtung bezüglich der Achse mit einem Gegengewinde des Grundkörpers zusammenwirkt. Dadurch ist die erfindungsgemäße Vorrichtung in technisch einfacher Weise zu realisieren.

Das Stütz- und/oder Führungselement kann durch eine drehbewegliche Rolle gebildet sein. Ferner kann der Vorsprung durch einen nach außen stehenden Kragen an der drehbeweglichen Rolle gebildet sein. Bevorzugt ist der Kragen an der Rolle angeformt, wobei die Kontur des Kragens in Art einer Scheibe ausgebildet sein kann.

Durch die kragenförmige Ausbildung des Vorsprunges an der drehbeweglichen Rolle kann das Stütz- bzw. Führungselement entlang des Außenumfangs des Wellrohres abrollen und greift dabei mit dem Kragen durchgehend in ein Wellental des Wellrohres ein, so dass die erfindungsgemäß vorgesehene Anschlags- und Führungsfunktion der als Kragen ausgebildeten Anschlagmittel während des Schneidvorganges des Wellrohres wirkt.

Indem der Kragen die Kontur einer Scheibe, insbesondere dünnwandigen Scheibe, aufweist, kann der Kragen in Wellentäler von Wellenrohren beliebiger Wellenausbildungen eingreifen und als Anschlag bzw. Führung im Zuge des Trennvorganges wirken. Das Stütz- und/oder Führungselement ist in einer ausreichenden Festigkeit zu realisieren, wenn es nach einer weiteren Ausgestaltung der Erfindung ein Metallteil ist. Bevorzugt ist das Stütz- und/oder Führungselement ein Aluminiumteil. Dadurch ist das Stütz- bzw. Führungselement gewichtsmäßig relativ leicht und gegen Korrosion geschützt.

Die Erfindung sieht vor, dass die Spanneinrichtung wenigstens ein im Wesentlichen radial bezüglich der Achse bewegbares Spannelement aufweist. Nach einer Ausgestaltung der Erfindung ist das wenigstens eine Spannelement durch das Schneidwerkzeug gebildet. Dadurch tritt im Zuge des Fixierens des Wellrohres in der Spanneinrichtung zugleich das Schneidwerkzeug in Wirkstellung gegen das Wellrohr unter Ausübung einer Klemmkraft. In Abhängigkeit der gegen das Wellrohr aufgebrachten Klemmkraft ist das Schneidwerkzeug somit zugleich in die Wirkstellung an das Wellrohr gebracht, um durch eine Relativbewegung des Wellrohres gegenüber dem Schneidwerkzeug, vorzugsweise ein mehrmaliges Drehen des Schneidwerkzeuges um das Wellrohr, den Trennvorgang zu vollziehen.

Bevorzugt ist dazu das Schneidwerkzeug als drehbewegliches Schneidrad ausgebildet, welches um seinen Außenumfang drehend an dem Außenumfang des Wellrohres im Zuge des Trennvorganges abrollt.

Indem das Spannelement im Wesentlichen radial bezüglich der Achse bewegbar ist, kann die auf das Wellrohr wirkende Klemmkraft auf einen vorgegebenen Wert eingestellt werden. Hierzu ist bevorzugt eine entsprechende Stelleinrichtung vorgesehen, welche an dem Grundkörper der erfindungsgemäßen Vorrichtung ausgebildet sein kann. Bevorzugt ist das radial bezüglich der Achse bewegbare Spannelement ebenfalls an dem Grundkörper bewegbar gelagert.

Nach einer weiteren Ausgestaltung der Erfindung ist ein Gelenkmittel vorgesehen, durch welches das Schneidwerkzeug in eine vorgebbare bzw. vorgegebene Schräglage bezüglich der Achse bringbar ist. Dadurch kann das Schneidwerkzeug mit seiner Schneidspitze besonders einfach auch an den sich an einem Wellenscheitel angrenzenden abgerundeten Bereich einer Welle in Schnittposition gebracht werden, indem das Schneidwerkzeug in eine solche Schräglage gebracht wird, dass das Schneidwerkzeug zu diesem gerundeten Wellenabschnitt radial ausgerichtet ist und in dieser Ausrichtung mit seiner Schneidspitze in Anlage gegen den Wellenabschnitt tritt.

Es bietet sich an, dass ein Einstellmechanismus vorgesehen ist, durch welchen eine Ausrichtung des Schneidwerkzeuges in eine ausgewählte oder angestrebte Schräglage erreicht wird bzw. eingestellt wird. Bevorzugt sollte das Schneidwerkzeug in der jeweiligen Schräglage fixierbar, insbesondere arretierbar sein.

Ferner sollte das Schneidwerkzeug ausgehend von einer Ausgangslage, in welcher das Schneidwerkzeug im Wesentlichen senkrecht zu der Achse bzw. der Mittelachse des Wellrohres steht, nach beiden Seiten in axialer Richtung in eine Schräglage bezüglich der Achse bzw. Mittelachse des Rohres bringbar sein. Dadurch ist das Schneidwerkzeug besonders flexibel in eine Ausrichtung gegenüber dem Wellrohr zu bringen, um möglichst an einer beliebigen Stelle einer Welle das Schneidwerkzeug optimal ausgerichtet in Schnittposition bringen zu können.

Nach einer bevorzugten Ausgestaltung der Erfindung ist das Gelenk mit Grundkörper zugeordnet bzw. an dem Grundkörper angeordnet.

Eine mögliche Ausgestaltung der Erfindung besteht darin, dass das Gelenkmittel durch ein an dem Grundkörper angeordnetes Drehgelenk gebildet ist, durch welches ein das Schneidwerkzeug haltendes Teil des Grundkörpers gegenüber einem wenigstens ein Spannelement der Spanneinrichtung haltendes Teil um eine im Wesentlichen quer zu der Achse verlaufende Schwenkachse in eine vorgegebene Winkellage bringbar ist. Eine derartige Ausgestaltung lässt sich in technisch einfacher Weise realisieren.

Weitere Ziele, Vorteile, Merkmale und Anwendungsmöglichkeiten der vorliegenden Erfindung ergeben sich aus der nachfolgenden Beschreibung zweier Ausführungsbeispiele anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform einer erfindungsgemäßen Vorrichtung zum Ablängen von Wellrohren in einer Seitenansicht zusammen mit einem aufgenommenen Wellrohr,
- Fig. 2: die Vorrichtung gemäß der Figur 1 in Schnittdarstellung entlang der Schnittlinie I-I der Figur 1 mit einem an einem Wellenscheitel eines Wellrohres angreifenden Schneidwerkzeug,
- Fig. 3a: eine vergrößerte Detaildarstellung des in der Figur 2 gekennzeichneten Bereiches J,
- Fig.3b: eine vergrößerte Detaildarstellung des in der Figur 2 gekennzeichneten Bereiches K,
- Fig. 4: die Vorrichtung gemäß der Figur 1 zusammen mit einem aufgenommenen Wellrohr in einer Schnittdarstellung gemäß der Figur 2, wobei das Schneidwerkzeug der Vorrichtung am Wellengrund einer Welle des Wellrohres angreift,
- Fig. 5: die Vorrichtung gemäß der Figur 1 zusammen mit einem aufgenommenen Wellrohr in einer Schnittdarstellung gemäß der Figur 2, wobei das Schneidwerkzeug der Vorrichtung an einer Flanke, einer Welle des Wellrohres angreift,
- Fig. 6: eine weitere mögliche Ausführungsform einer erfindungsgemäßen Vorrichtung zum Ablängen von Wellrohren in einer Seitenansicht zusammen mit einem aufgenommenen Wellrohr,
- Fig. 7: die Vorrichtung gemäß der Figur 6 in Schnittdarstellung entlang der Schnittlinie M-M der Figur 6 mit einem im Bereich eines Wellenscheitels des Wellrohres angreifenden Schneidwerkzeug,
- Fig. 8a: eine vergrößerte Detaildarstellung des in der Figur 7 gekennzeichneten Bereiches N und
- Fig. 8b: eine vergrößerte Detaildarstellung des in der Figur 7 gekennzeichneten Bereiches O.

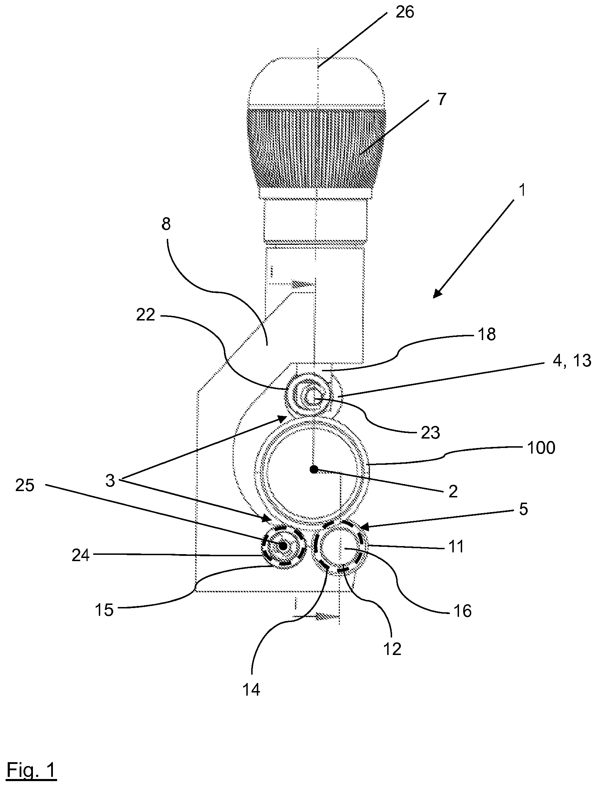

Figur 1 zeigt - in schematischer Darstellung - eine mögliche Ausführungsform einer Vorrichtung 1 zum Ablängen von Wellrohren in einer Seitenansicht. Es ist die Vorrichtung 1 zusammen mit einem abzulängenden Wellrohr 100 dargestellt.

Die Vorrichtung 1 hat eine Spanneinrichtung 3, mittels welcher das abzulängende Wellrohr 100 in einer Bearbeitungsposition fixiert werden kann. In der Figur 1 ist das Wellrohr 100 bereits in die Bearbeitungsposition gebracht und mittels der Spanneinrichtung 3 fixiert.

Ferner weist die Vorrichtung 1 ein Schneidwerkzeug 4 auf, welches in dieser Bearbeitungsposition gegen das Wellrohr 100 in Wirkstellung gebracht ist, so dass durch Bewegen von Schneidwerkzeug 4 und Wellrohr 100 relativ zueinander ein Trennen bewirkt wird, indem beispielsweise das Schneidwerkzeug 4 um das Wellrohr 100 bewegt wird.

Um das Wellrohr 100 in der Bearbeitungsposition zu fixieren, wirkt die Spanneinrichtung 3 radial bezüglich einer Achse 2, welche bevorzugt mit der Mittelachse des in der Bearbeitungsposition aufgenommenen und fixierbaren bzw. fixierten Wellrohres 100 zusammenfällt. Um das Wellrohr 100 in der Bearbeitungsposition zu fixieren, wird die Spanneinrichtung 3 gegen das Wellrohr 100 umfangsseitig verspannend in Wirkstellung gebracht.

Die Spanneinrichtung 3 ist an einem Grundkörper 8 gebildet, welcher ein Griffteil 7 zum Ergreifen durch den Benutzer der Vorrichtung 1 aufweist. Durch das Griffteil 7 kann der Benutzer die Vorrichtung 1 mit einer Hand ergreifen und in einer Hand halten und somit durch Einhandbetätigung das Wellrohr 100 ablängen, indem beispielsweise die Vorrichtung 1 mit seinem in der Bearbeitungsposition aufgenommenen Wellrohr 100 gegen das Wellrohr 100 anliegenden Schneidwerkzeug 4 um das Wellrohr 100 bewegt und dadurch das Ablängen des Wellrohres 100 bewirkt wird.

Zum Fixieren des Wellrohres 100 in der Bearbeitungsposition weist die Spanneinrichtung 3 wenigstens drei Spannelemente 13, 14 und 15 auf, welche auf den Umfang des Wellrohres 100 wirken. Das Spannelement 13 ist in der Ansicht gemäß der Figur 1 zumindest teilweise sichtbar. Die Spannelemente 14 und 15 sind in der Ansicht gemäß der Figur 1 durch andere Bauteile der Vorrichtung 1 überdeckt, wobei deren jeweilige Außenumfangskontur durch eine gestrichelte Linie angedeutet ist.

Von den Spannelementen 13, 14 und 15 sind die Spannelemente 14 und 15 an dem Grundkörper 8 angeordnet, insbesondere ortsfest bezüglich des Grundkörpers 8 ausgebildet. Die Spannelemente 14 und 15 liegen in einem Abstand zueinander, so dass die Spannelemente 14 und 15 als Aufnahme für das Wellrohr 100 dienen, um darauf das Wellrohr 100 umfangsseitig auflegen zu können. In der Figur 1 ist die Vorrichtung 1 in der Weise dargestellt, dass das Griffteil 7 nach oben weist und die Spannelemente 14 und 15 an einem unteren Endbereich des Grundkörpers 8 liegen, so dass das auf die Spannelemente 14 und 15 aufgelegte Wellrohr 100 vor der Verspannung mittels der Spanneinrichtung 3 durch dessen Eigengewicht aufgelegt bleibt.

Das Spannelement 13 ist translatorisch bewegbar an dem Grundkörper 8 gelagert und kann von einer Ausgangsposition in Richtung gegen die Spannelemente 14 und 15 translatorisch bewegt werden. Ein Verspannen des Wellrohres 100 wird dadurch erreicht, dass das Wellrohr 100 zwischen das Spannelemente 13 einerseits und die Spannelemente 14 und 15 andererseits gebracht wird und anschließend das Spannelement 13 von der Ausgangsposition in Richtung gegen das Wellrohr 100 soweit translatorisch bewegt wird, bis es zu einer Verklemmung des Wellrohres 100 zwischen den Spannelementen 13, 14 und 15 kommt. Das Wellrohr 100 ist dann in der Bearbeitungsposition fixiert. In der Bearbeitungsposition wirken die Spannelemente 13, 14 und 15 in radialer Richtung bezüglich der Achse 2 auf den Umfang des Wellrohres 100.

Bevorzugt ist das Griffteil 7 Bestandteil eines Betätigungsmechanismus, durch welchen das Spannelement 13 translatorisch bewegt werden kann. Bevorzugt ist das Griffteil 7 dazu als Drehteil ausgebildet, so dass durch Verdrehen des Griffteiles 7, beispielsweise um seine eigene Längsachse 26, es zu einer translatorischen Verstellbewegung des Spannelementes 13 kommt, beispielsweise indem ein Schraub- und/oder Gewindemechanismus zwischengeschaltet ist. Durch den Betätigungsmechanismus bzw. Schraub- und/oder Gewindemechanismus ist erreicht, dass das Spannelement 13 in der ausgestellten Position gegen das Wellrohr 100 verbleibt und somit die Spannkraft der Spanneinrichtung 3 erhalten bleibt.

Bevorzugt ist das translatorisch bewegbare Spannelement 13 durch das Schneidwerkzeug 4 selbst gebildet. Die Verklemmung des Wellrohres 100 in der Bearbeitungsposition findet somit durch das Schneidwerkzeug 4 selbst statt, welches gegen den Außenumfang des Wellrohres 100 gedrückt wird. Dadurch kommt es zu einer Verspannung des Wellrohres 100 zwischen dem Schneidwerkzeug 4 und den Spannelementen 14 und 15. Durch eine weitergehend erhöhte Klemmkraft drück das Schneidwerkzeug 4 mit seiner Schneide in die Umfangswandung des Wellrohres 100 ein, so dass durch eine anschließende Verdrehbewegung der Vorrichtung 1 relativ gegenüber dem Wellrohr 100 es zu einem Durchtrennen der Umfangswandung des Wellrohres 100 kommt.

Bevorzugt ist das Schneidwerkzeug 4 dazu als Schneidrad ausgebildet, welches drehbeweglich um seine Mittelachse an einem translatorisch mittels des Griffteils 7 bewegbaren Führungselement 18 gelagert ist. Bevorzugt sind die Spannelemente 14 und 15 jeweils als Rolle oder Kugel ausgebildet, welche bevorzugt drehbeweglich um ihre eigene Mittelachse an dem Grundkörper 8 gelagert sind.

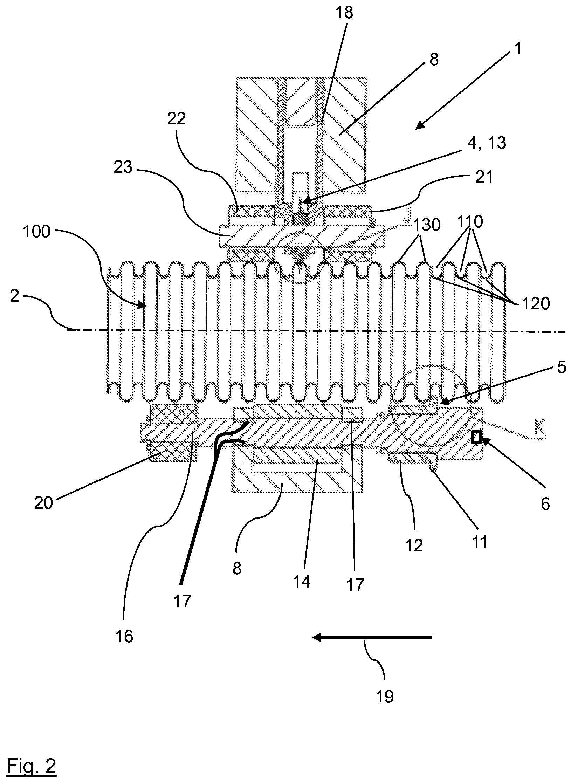

Figur 2 zeigt die Vorrichtung 1 im Bereich des Wellrohres 100 in einer Schnittdarstellung. Wie aus einer Zusammenschau der Figuren 1 und 2 ersichtlich ist, weist die Vorrichtung 1 in ein Wellental 110 des Wellrohres 100 eingreifende Anschlagmittel 5 auf, welche in ihrem Abstand gegenüber dem Schneidwerkzeug 4 in axialer Richtung bezüglich der Achse 2 veränderbar sind.

Im Zuge der Erfindung ist unter dem Wellental 110 die zwischen zwei benachbarten Wellen gebildete Vertiefung zu verstehen, welche in dem Wellengrund 120 endet. Ausgehend von dem Wellengrund 120 verläuft eine jede Welle hin zu dem jeweiligen Wellenscheitel 130, welche im Wesentlichen die nach außen stehende Spitze einer jeweiligen Welle des Wellrohrs 100 bildet.

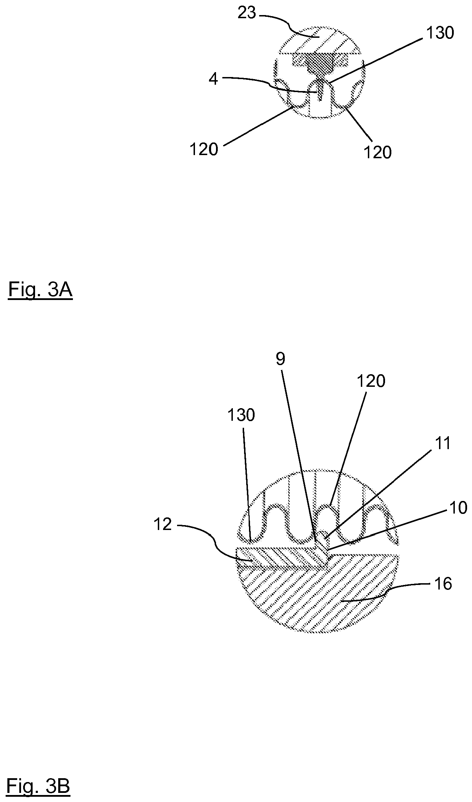

Wie aus der Figur 2 und besonders aus der vergrößerten Detaildarstellung in Figur 3a ersichtlich ist, ist das Schneidwerkzeug 4 in der Bearbeitungsposition an einem Wellenscheitel 130 des Wellrohres 100 in Wirkstellung gebracht. Ausgehend von dieser Ausrichtung des Schneidwerkzeuges 4 sind die Anschlagmittel 5 in axialer Richtung bezüglich der Achse 2 soweit angepasst, dass die Anschlagmittel 5 als Anlage bzw. Anschlag gegen eine Seitenwandung bzw. Flanke einer Welle des Wellrohres 100 wirken.

Im Zuge des Trennvorganges des Wellrohres 100 durch Verdrehen der Vorrichtung 1 bzw. des Schneidwerkzeuges 4 relativ gegenüber dem Wellrohr 100, insbesondere durch Verdrehen des Schneidwerkzeuges 4 um das Wellrohr 100, gleiten die Anschlagmittel 5 entlang der Seitenwandung der einen Welle, so dass dadurch die Vorrichtung 1 bzw. das Schneidwerkzeug 4 in axialer Richtung bezüglich der Achse 2 geführt ist und folglich ein Abrutschen des Schneidwerkzeuges 4 relativ gegenüber dem Wellrohr 100 in axialer Richtung gemäß dem Pfeil 19 vermieden ist. Durch die Anschlagmittel 5 ist somit ein Trennen des Wellrohres 100 durch eine Verdrehbewegung des Schneidwerkzeuges 4 relativ gegenüber dem Wellrohr 100 um die Achse 2 mit einem im Wesentlichen senkrechten Schnitt zur Achse 2 möglich.

Figur 3b zeigt das Detail K der Figur 2 in vergrößerter Darstellung. Wie daraus und aus der Figur 2 ersichtlich ist, sind die Spannmittel 5 bevorzugt durch einen nach außen stehenden Vorsprung 11 gebildet, welcher beispielsweise umlaufend, insbesondere durch einen umlaufenden Kragen, gebildet sein kann. Der Vorsprung 11 ist ferner bevorzugt an einem Stütz- und/oder Führungselement 12 gebildet, insbesondere daran angeformt, wobei das Stütz- und/oder Führungselement 12 als Führung bzw. Stütze des Wellrohres 100 in radialer Richtung dient.

Die Anschlagmittel 5, insbesondere der Vorsprung 11, weist vorzugsweise zwei Anschlagflächen 9 und 10 auf, welche in der Bearbeitungsposition wahlweise gegen eine der zueinander entgegen gerichteten Flanken von benachbarten Wellen bringbar sind.

Wie insbesondere aus der Figur 2 ersichtlich ist, wirken die Anschlagmittel 5 mit Stellmitteln 6 zusammen, durch welche die Anschlagsmittel 5 in ihrem Abstand gegenüber dem Schneidwerkzeug 4 in axialer Richtung bezüglich der Achse 2 einstellbar sind. Die Stellmittel 6 können durch einen Schraubmechanismus gebildet sein, welcher von außen betätigbar ist. Dazu kann es vorgesehen sein, dass das Stütz- bzw. Führungselement 12 an einem Bolzen 16 angeordnet, insbesondere an dem Bolzen 16 um seine eigene Mittelachse drehbar gelagert ist, wobei der Bolzen 16 ein Gewinde aufweist, welches mit einem Gegengewinde 17 beispielsweise des Grundkörpers 8 kämmt, so dass durch Verdrehen des Bolzens 16 eine Vorschubbewegung in axialer Richtung bezüglich der Achse 2 stattfindet.

Das Stütz- bzw. Führungselement 12 ist bevorzugt in axialer Richtung bezüglich der Achse 2 ortsfest an dem Bolzen 16 angeordnet, so dass durch die Vorschubbewegung des Bolzens 16 auch das Stütz- bzw. Führungselement 12 mitsamt seinem als Anschlagmittel wirkenden Vorsprung 11 in axialer Richtung bezüglich der Achse 2 mitbewegt wird.

Der Bolzen 16 kann an seinem einen äußeren Ende als Schraubkopf ausgebildet sein, so dass beispielsweise mittels eines Schraubenziehers eine Verdrehbewegung des Bolzens 16 durchgeführt werden kann und damit eine Einstellung der Anschlagmittel 5 in axialer Richtung bezüglich der Achse 2 durchgeführt werden kann. Die Verstellung der Anschlagmittel 5 in axialer Richtung bezüglich der Achse 2 ist dann noch möglich, wenn das Wellrohr 100 bereits in der Bearbeitungsposition eingespannt vorliegt.

Wie insbesondere aus den Figuren 1 und 2 ersichtlich ist, weist die Vorrichtung 1 bevorzugt weitere Stütz- und/oder Führungselemente 20, 21 und 22 auf, welche zum Führen bzw. Abstützen des Wellrohres 100 in radialer Richtung während des Trennvorganges dienen.

Das Stütz- bzw. Führungselement 20 ist vorzugsweise an dem Bolzen 16 angeordnet, insbesondere um seine Mittelachse an dem Bolzen 16 drehbar gelagert. Bevorzugt sind das Stütz- bzw. Führungselement 20 und das mit Vorsprung 11 versehene Stütz- bzw. Führungselement 12 in den Endbereichen des Bolzens 16 angeordnet, wobei dazwischen zwei gewindekämmende Bereiche von Gewinde des Bolzens 16 und Gegengewinde 17 liegen und wiederum zwischen den zwei gewindekämmenden Bereichen das Spannelement 14 angeordnet ist. Spannelement 14 und Stütz- bzw. Führungselemente 20 und 12 sind dabei bevorzugt koaxial zur Mittelachse des Bolzens 16 angeordnet.

Die Stütz- bzw. Führungselemente 21 und 22 sind im Bereich des Schneidwerkzeuges 4 angeordnet, wobei das bevorzugt als Drehscheibe ausgebildete Schneidwerkzeug 4 zusammen mit den Stütz- bzw. Führungselementen 21 und 22 koaxial bezüglich eines gemeinsamen Stiftelementes 23 angeordnet und zwischen den Stütz- bzw. Führungselementen 21 und 22 das Schneidwerkzeug 4 mit dem Führungselement 18 angeordnet ist. Bevorzugt sind Schneidwerkzeug 4, Stütz- bzw. Führungselemente 21 und 22 drehbeweglich um das Stiftelement 23 ausgebildet und vorzugsweise in axialer Richtung an dem Stiftelement 23 im Wesentlichen ortsfest angebunden.

Wie insbesondere aus der Figur 2 ersichtlich ist, weisen die Stütz- bzw. Führungselemente 21 und 22 einen Innenumfang auf, dessen Durchmesser größer als der Außendurchmesser des Stiftelementes 23 ist, so dass die Stütz- bzw. Führungselemente 21 und 22 relativ gegenüber dem Stiftelement 23 in radialer Richtung ein gewolltes Spiel aufweisen, ein Eintauchen des Schneidwerkzeuges 4 in die Wandung des Wellrohres 100 zu ermöglichen, bevor es zur Anlage der Außenwandung des Wellrohres 100 an die Stütz- bzw. Führungselemente 21 und 22 kommt. Durch das Spiel ist es ferner ermöglicht, dass trotz der Stütz- bzw. Führungselemente 21 und 22 das Schneidwerkzeug 4 sowohl am Wellenscheitel 130 als auch am Wellengrund 120 der Wellen des Wellrohres 100 angesetzt werden kann und ein Trennen des Wellrohres 100 an diesem jeweiligen Bereich erfolgt.

Wie aus der Figur 1 noch ersichtlich ist, ist koaxial zu dem Spannelement 15 wenigstens ein Stütz- und/oder Führungselement 24 angeordnet, welches als Stütze und/oder Führung für das Wellrohr 100 in radialer Richtung dient. Es kann auch im Hinblick auf das Spannelement 15 ein Stiftelement 25 vorgesehen sein, an welchem zum einen das Stütz- bzw. Führungselement 25 und ein (in der Figur 1 nicht sichtbares) weiteres Stütz- bzw. Führungselement angeordnet sind und dazwischen das Spannelement 15 liegt, wobei das (in der Figur 1 nicht sichtbare) Stütz- bzw. Führungselement, das Stütz- bzw. Führungselement 24 und das Spannelement 15 koaxial bezüglich des Stiftelementes 25 liegen, insbesondere auf dem Stiftelement 25 drehbar gelagert sind, und vorzugsweise in axialer Richtung bezüglich des Stiftelementes 25 im Wesentlichen ortsfest vorliegen.

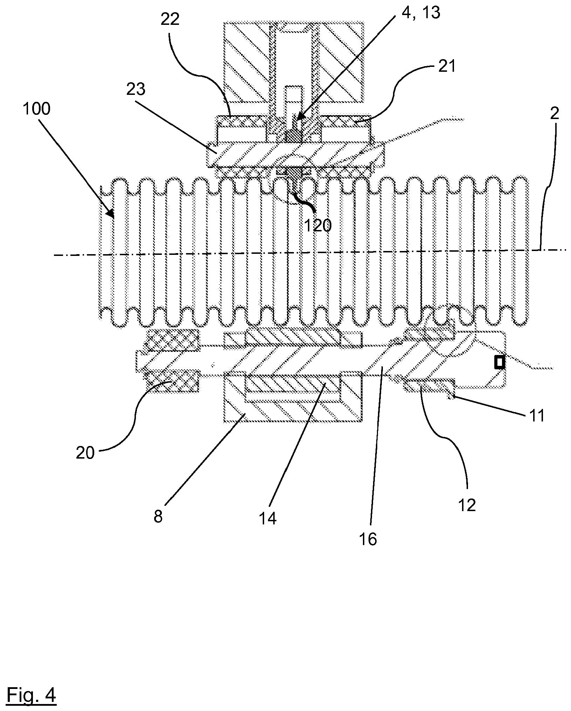

Figur 4 zeigt die Vorrichtung 1 gemäß der Figuren 1 und 2 in einer Schnittdarstellung in Art der Figur 2.

Im Unterschied zu der Anordnung des Wellrohres 100 gegenüber dem Schneidwerkzeug 4 in der Figur 2 ist in der Figur 4 das Wellrohr 100 in der Bearbeitungsposition in der Weise fixiert, dass das Schneidwerkzeug 4 an dem Wellengrund 120 einer Welle angreift und die Anschlagmittel 5 in der Weise in axialer Richtung bezüglich der Achse 2 in Anlage gegen eine Seitenwandung einer Welle gebracht sind. Ein seitliches Wegbewegen in axialer Richtung des Wellrohres 100 und/oder des Schneidwerkzeuges 4 von der angesetzten Schnittposition im Wellengrund 120 ist somit vermieden, da bei dem Trennvorgang eine Drehbewegung zwischen dem Wellrohr 100 und der Vorrichtung 1 um die Achse 2 unter Führung der Seitenwandung an den Anschlagmitteln 5 erfolgt.

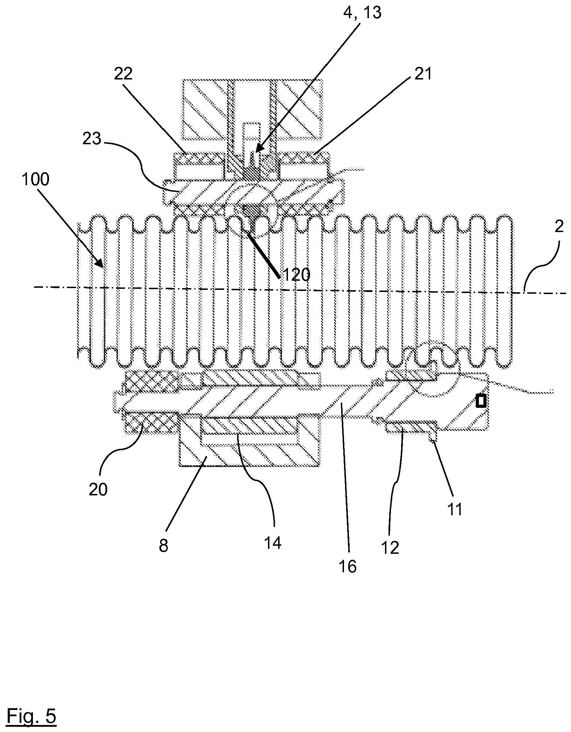

Figur 5 zeigt die Vorrichtung 1 gemäß der Figuren 1 und 2 in einer weiteren Schnittdarstellung in Art der Figur 2. In der Figur 5 ist das Wellrohr 100 in der Bearbeitungsposition in der Weise verspannt, dass das Schneidwerkzeug 4 in ein Wellental 110 des Wellrohres 100 eingreift und in axialer Richtung bezüglich der Achse 2 bis zur Anlage gegen die Seitenwandung bzw. Flanke einer der Welle gebracht ist. Die Ausrichtung des Schneidwerkzeuges 4 an dem Wellrohr 100 in axialer Richtung bezüglich der Achse 2 kann dadurch erzeugt sein, dass die Anschlagmittel 5 soweit in axialer Richtung bezüglich der Achse 2 verstellt worden sind, dass das Wellrohr 100 zwischen dem Schneidwerkzeug den Anschlagmittel 5 im Wesentlichen spielfrei in axialer Richtung bezüglich der Achse 2 vorliegt bzw. verspannt ist. Durch eine Relativbewegung von Schneidwerkzeug 4 und Wellrohr 100 gegeneinander um die Achse 2 findet dadurch ein Trennen im Wesentlichen ohne Verschiebung des Schneidwerkzeuges 4 in axialer Richtung statt. Ein Schnitt durch das Wellrohr 100 ist somit im Wesentlichen senkrecht zu dessen Mittelachse bzw. Achse 2 erzielt.

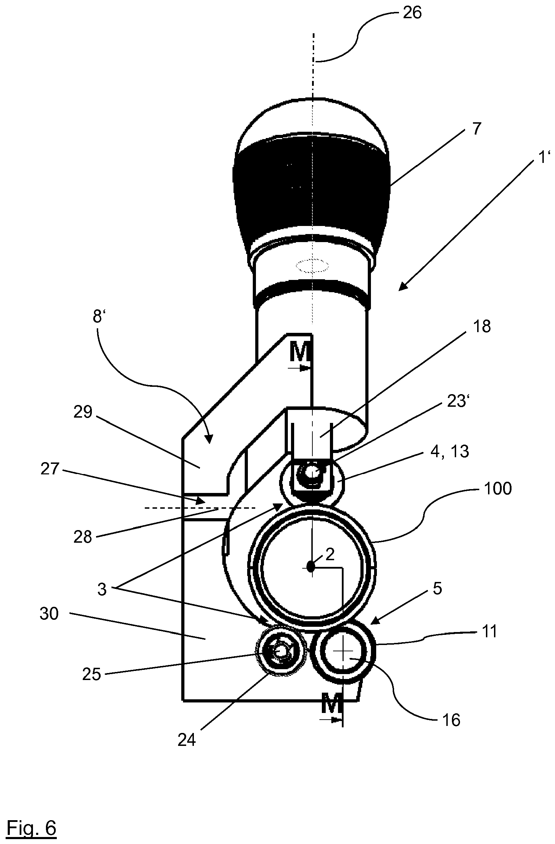

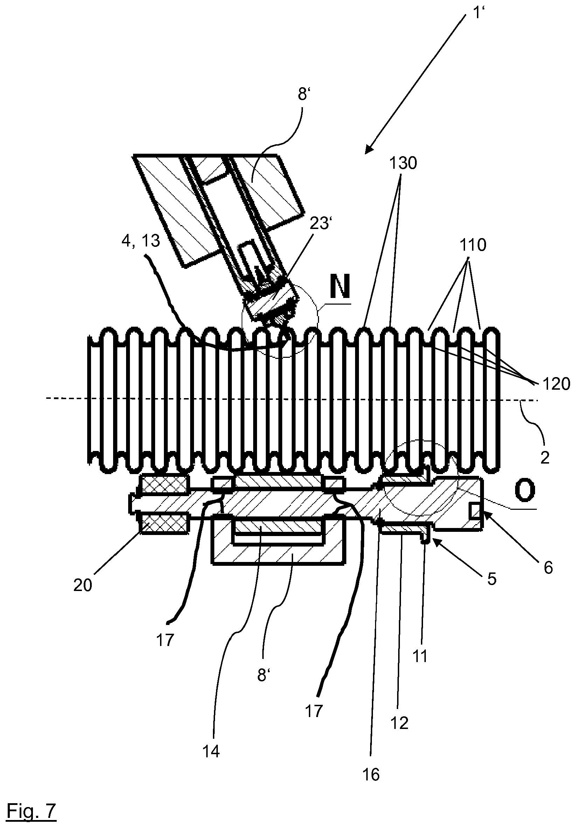

Figuren 6 und 7 zeigen eine weitere mögliche Ausführungsform einer Vorrichtung 1' zum Ablängen von Wellrohren in unterschiedlicher Darstellung. Bauteile der Vorrichtung 1' gemäß der Figuren 6 und 7, welche mit den Bauteilen der Vorrichtung 1 gemäß der Figuren 1 bis 5 identisch oder funktionsgleich sind, sind mit gleichen Bezugszeichen versehen; insofern wird auf die Beschreibung zu der Vorrichtung 1 in den Figuren 1 bis 5 verwiesen.

Die Vorrichtung 1' gemäß der Figuren 6 und 7 unterscheidet sich von der Vorrichtung 1 gemäß der Figuren 1 bis 5 unter anderem durch ein Gelenkmittel 27, durch welches das Schneidwerkzeug 4 in eine angestrebte bzw. gewünschte Schräglage bezüglich der Achse 2 gebracht werden kann. Bevorzugt sind die Gelenkmittel 27 derart ausgebildet, dass das Schneidwerkzeug 4 auch dann noch in die gewünschte Schräglage gebracht werden kann, wenn das Wellrohr 100 bereits in der Bearbeitungsposition fixiert ist.

Die Vorrichtung 1' weist einen zu dem Grundkörper 8 der Vorrichtung 1 modifizierten Grundkörper 8' auf, welchem das Gelenkmittel 27 zugeordnet ist. Bevorzugt ist das Gelenkmittel 27 dazu als Drehgelenk ausgebildet, welches zwei Teile 29 und 30 des Grundkörpers 8' um eine Schwenkachse 28 gegeneinander verschwenkbar hält. Dem Teil 29 ist das Schneidwerkzeug 4 zugeordnet und dem Teil 30 sind die Spannelemente 14 und 15 der Spanneinrichtung 3 zugeordnet. Um die Schräglage des Schneidwerkzeuges 4 zu erzielen, ist die Schwenkachse 28 im Wesentlichen quer zur Achse 2 bzw. der Mittelachse des Wellrohres 100 ausgerichtet.

Ausgehend von einer Ausgangslage, in welcher das Schneidwerkzeug 4 im Wesentlichen senkrecht zu der Achse 2 ausgerichtet ist, kann mittels einer Schwenkbewegung um die Schwenkachse 28 das Schneidwerkzeug 4 in eine vorgegebene Winkellage in Bezug auf die Ausgangsposition gebracht werden.

Bevorzugt ermöglicht das Gelenkmittel 27 eine Schwenkbewegung um die Schwenkachse 28 in beide Drehrichtungen, so dass ausgehend von der Ausgangsposition das Schneidwerkzeug 4 in eine vorgegebene Winkellage α in die eine Richtung wie auch in eine vorgegebene Winkellage α in die andere Schwenkrichtung einstellbar ist.

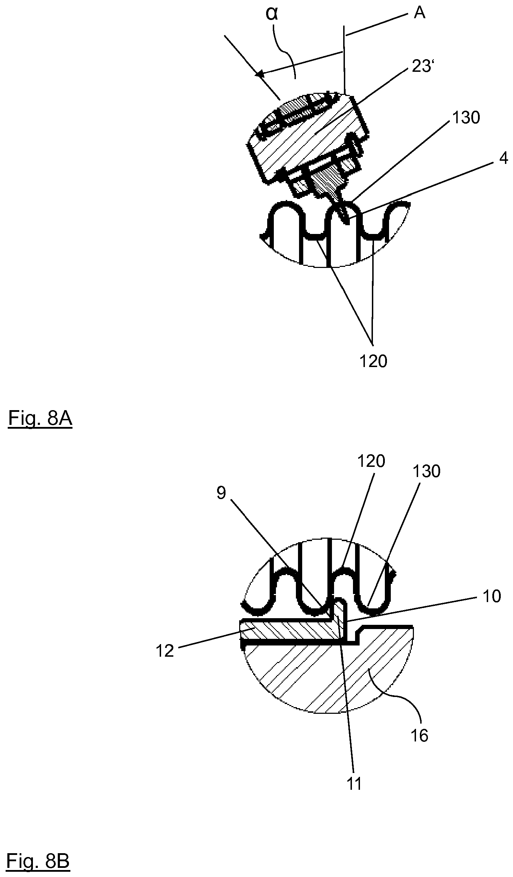

Wie insbesondere aus der Figur 7 und aus der vergrößerten Detaildarstellung der Figur 8A ersichtlich ist, bietet sich die Ausrichtung des Schneidwerkzeuges 4 in eine Schräglage besonders dann an, wenn das Wellrohr 100 etwas versetzt zu dem Scheitel einer Welle, beispielsweise in einem daran angrenzenden abgerundeten Abschnitt der Welle, getrennt werden soll und somit das Schneidwerkzeug 4 in diesem abgerundeten Bereich in Schnittposition zu bringen ist.

In dieser Schnittposition des Schneidwerkzeuges 4 erfolgt dann durch die Relativbewegung des Schneidwerkzeuges 4 gegenüber dem Wellrohr 100 um die Achse 2 ein Trennen des Wellrohres 100, wobei die Anschlagmittel 5 bzw. der als Kragen ausgebildete Vorsprung 11 gegen eine Flanke einer Welle wirkt (siehe insbesondere Figur 8B) und somit das Wellrohr 100 während des Schneidvorganges in seiner axialen Ausrichtung gegenüber dem Werkzeug 4 unverändert bleibt.

Weiterhin unterscheidet sich die Vorrichtung 1' gemäß der Figuren 6 und 7 von der Vorrichtung 1 der Figuren 1 bis 5 unter anderem dadurch, dass die bei der Vorrichtung 1 vorzugsweise vorgesehenen Stütz- bzw. Führungselemente 21 und 22 bei der Vorrichtung 1' weggelassen sind. Insofern weist die Vorrichtung 1 ein als Drehachse für das Schneidwerkzeug 4 wirkendes Stiftelement 23' auf, welches gegenüber dem Stiftelement 23 der Vorrichtung 1 verkürzt ist. Dadurch und durch die fehlenden Stütz- bzw. Führungselemente an dem Stiftelement 23' ist bei der Vorrichtung 1' der Bewegungsfreiraum im Bereich des Schneidwerkzeuges 4 vergrößert, da etwaige Stütz- bzw. Führungselemente an dem Stiftelement 23' ein Schrägstellen des Schneidwerkzeuges 4 nicht behindern.

Bevorzugt ist das Schneidwerkzeug 4 mittels des Gelenkmittels 27 ausgehend von der Ausgangsposition um einen Winkel α bis etwa 45 bis 50 Grad verschwenkbar. In Figur 8A sind zum besseren Verständnis beispielhaft die Ausgangsposition durch eine mit B gekennzeichnete Linie und der Winkel α dargestellt.

### Bezugszeichenliste

- 1: Vorrichtung
- 1': Vorrichtung
- 2: Achse
- 3: Spanneinrichtung
- 4: Schneidwerkzeug
- 5: Anschlagmittel
- 6: Stellmittel
- 7: Griffteil
- 8: Grundkörper
- 8': Grundkörper
- 9: Anschlagfläche
- 10: Anschlagfläche
- 11: Vorsprung
- 12: Stütz- und/oder Führungselement
- 13: Spannelement
- 14: Spannelement
- 15: Spannelement
- 16: gewindeaufweisender Bolzen
- 17: Gegengewinde
- 18: Führungselement
- 19: Pfeil
- 20: Stütz- und/oder Führungselement
- 21: Stütz- und/oder Führungselement
- 22: Stütz- und/oder Führungselement
- 23: Stiftelement
- 23': Stiftelement
- 24: Stütz- und/oder Führungselement
- 25: Stiftelement
- 26: Längsachse
- 27: Gelenkmittel
- 28: Schwenkachse
- 29: Teil
- 30: Teil

- α: Winkel
- A: Ausgangsposition

- 100: Wellrohr
- 110: Wellental
- 120: Wellengrund
- 130: Wellenscheitel

## Patentansprüche

1. Vorrichtung (1; 1') zum Ablängen von Wellrohren mit einem, ein Griffteil (7) aufweisenden Grundkörper (8; 8'), mit einer radial bezüglich einer Achse (2) wirkenden Spanneinrichtung (3) zum Fixieren eines Wellrohres (100) in einer Bearbeitungsposition, mit einem Schneidwerkzeug (4), welches in der Bearbeitungsposition gegen das Wellrohr (100) in Wirkstellung gebracht ist oder bringbar ist, so dass durch Bewegen von Schneidwerkzeug (4) und Wellrohr (100) relativ zueinander ein Trennen bewirkt wird, und mit in ein Wellental (110) des Wellrohres (100) eingreifbaren Anschlagmitteln (5), welche wenigstens eine Anschlagfläche (9) als Anschlag gegen eine Flanke einer Welle des Wellrohres (100) aufweisen, wobei die Spanneinrichtung (3) wenigstens drei Spannelemente (13, 14, 15) aufweist, welche an dem Grundkörper (8; 8') angeordnet sind und in der Bearbeitungsposition auf den Umfang des Wellrohres (100) wirken, wobei eines der Spannelemente (13, 14, 15) an dem Grundkörper (8; 8') translatorisch bewegbar gelagert ist, um von einer Ausgangsposition in Richtung gegen die wenigstens zwei anderen Spannelemente (14, 15) bewegt zu werden, und die wenigstens zwei anderen Spannelemente (14, 15) als Rolle ausgebildet sind und in einem Abstand zueinander liegen, so dass sie als Aufnahme für das Wellrohr (100) dienen, um darauf das Wellrohr (100) umfangsseitig aufzulegen, wobei in der Bearbeitungsposition des Wellrohres (100) der Abstand zwischen den Anschlagmitteln (5) und dem Schneidwerkzeug (4) in axialer Richtung bezüglich der Achse (2) veränderbar ist, um in der Bearbeitungsposition des Wellrohres (100) die wenigstens eine Anschlagfläche (9) gegen eine Flanke einer Welle des Wellrohres (100) in Anlage zu bringen, **dadurch gekennzeichnet, dass** die Anschlagmittel (5) mit Stellmitteln (6) zusammenwirken, durch welche in der Bearbeitungsposition des Wellrohres (100) die Anschlagmittel (5) in ihrem Abstand gegenüber dem Schneidwerkzeug (4) in axialer Richtung bezüglich der Achse (2) derart einstellbar sind, dass die wenigstens eine Anschlagfläche (9) gegen eine Flanke einer Welle des Wellrohres (100) vorliegt und als Zwangsführung für das Wellrohr (100) dient, um bei einer umlaufenden Schneidbewegung des Schneidwerkzeuges (4) um das Wellrohr (100) ein seitliches Wegrutschen des Schneidwerkzeuges (4) zu verhindern.

2. Vorrichtung nach Anspruch 1, **dadurch gekennzeichnet, dass** die Stellmittel (6) durch einen Schraubmechanismus gebildet sind, welcher von außen betätigbar ist.

3. Vorrichtung nach Anspruch 1 oder 2, **dadurch gekennzeichnet, dass** die Anschlagmittel (5) an dem Grundkörper (8; 8') angeordnet sind.

4. Vorrichtung nach einem der vorhergehenden Ansprüche, **dadurch gekennzeichnet, dass** die Anschlagmittel (5) an dem Grundkörper (8; 8') in axialer Richtung bezüglich der Achse (2) bewegbar gelagert sind.

5. Vorrichtung nach einem der vorhergehenden Ansprüche, **dadurch gekennzeichnet, dass** die Anschlagmittel (5) zwei Anschlagflächen (9, 10) aufweisen, welche in der Bearbeitungsposition wahlweise gegen zueinander entgegen gerichtete Flanken von Wellen, insbesondere benachbarter Wellen, bringbar sind.

6. Vorrichtung nach einem der vorhergehenden Ansprüche, **dadurch gekennzeichnet, dass** die Anschlagmittel (5) durch einen nach außen stehenden Vorsprung (11) eines als Stütze und/oder Führung für das Wellrohr (100) dienenden Stütz- und/oder Führungselements (12) gebildet ist, welches axial bezüglich der Achse (2) bewegbar ist.

7. Vorrichtung nach Anspruch 6, **dadurch gekennzeichnet, dass** das Stütz- und/oder Führungselement (12) koaxial zu einem Spannelement (13) der Spanneinrichtung (3) angeordnet ist.

8. Vorrichtung nach Anspruch 6 oder 7, **dadurch gekennzeichnet, dass** das Stütz- und/oder Führungselement (12) auf einem Gewindebolzen (15) drehbar gelagert ist, welcher zum Bewegen in axialer Richtung bezüglich der Achse (2) mit einem Gegengewinde (16) des Grundkörpers (8; 8') zusammenwirkt.

9. Vorrichtung nach einem der Ansprüche 6 bis 8, **dadurch gekennzeichnet, dass** das Stütz- und/oder Führungselement (12) durch eine drehbewegliche Rolle gebildet ist und vorzugsweise der Vorsprung (11) durch einen nach außen stehenden Kragen gebildet ist.

10. Vorrichtung nach einem der Ansprüche 6 bis 9, **dadurch gekennzeichnet, dass** das Stütz- und/oder Führungselement (12) ein Metallteil, insbesondere ein Aluminiumteil, ist.

11. Vorrichtung nach einem der vorhergehenden Ansprüche, **dadurch gekennzeichnet, dass** die Spanneinrichtung (3) wenigstens ein im Wesentlichen radial bezüglich der Achse (2) bewegbares Spannelement (14) aufweist, welches durch das Schneidwerkzeug (4) gebildet ist.

12. Vorrichtung nach einem der vorhergehenden Ansprüche, **dadurch gekennzeichnet, dass** ein Gelenkmittel (27) vorgesehen ist, durch welches das Schneidwerkzeug (4) in eine vorgebbare Schräglage bezüglich der Achse (2) bringbar ist.

13. Vorrichtung nach Anspruch 12, **dadurch gekennzeichnet, dass** das Gelenkmittel (27) durch ein an dem Grundkörper (8') angeordnetes Drehgelenk gebildet ist, durch welches ein das Schneidwerkzeug (4) haltendes Teil (29) des Grundkörpers (8') gegenüber einem wenigstens ein Spannelement (14, 15) der Spanneinrichtung (3) haltendes Teil (30) um eine im Wesentlichen quer zur Achse (2) verlaufende Schwenkachse (28) in eine vorgegebene Winkellage bringbar ist.

## Claims

1. Device (1; 1') for cutting corrugated tubes to length, having a basic body (8; 8') which has a handle part (7), having a clamping device (3) acting radially with respect to an axis (2) and intended for fixing a corrugated tube (100) in a machining position, having a cutting tool (4) which, in the machining position, is or can be brought into an operative position against the corrugated tube (100) such that, when moving the cutting tool (4) and corrugated tube (100) relative to one another, a separating operation is brought about, and having stop means (5) which can be made to engage in a corrugation trough (110) of the corrugated tube (100) and which have at least one stop surface (9) as stop against a flank of a corrugation of the corrugated tube (100), wherein the clamping device (3) has at least three clamping elements (13, 14, 15) which are arranged on the basic body (8; 8') and act on the circumference of the corrugated tube (100) in the machining position, wherein one of the clamping elements (13, 14, 15) is mounted so as to be translationally movable on the basic body (8; 8') in order to be moved from a starting position in a direction towards the at least two other clamping elements (14, 15), and the at least two other clamping elements (14, 15) take the form of rollers and are situated at a distance from one another such that serve as a receptacle for the corrugated tube (100) in order to place the corrugated tube (100) circumferentially thereon, wherein, in the machining position of the corrugated tube (100), the distance between the stop means (5) and the cutting tool (4) can be varied in the axial direction with respect to the axis (2) in order, in the machining position of the corrugated tube (100), to bring the at least one stop surface (9) into contact with a flank of a corrugation of the corrugated tube (100), **characterized in that** the stop means (5) interact with setting means (6) by means of which, in the machining position of the corrugated tube (100), the stop means (5) can be set in their distance from the cutting tool (4) in the axial direction with respect to the axis (2) in such a way that the at least one stop surface (9) is present against a flank of a corrugation of the corrugated tube (100) and serves as a positive guide for the corrugated tube (100) in order to prevent the cutting tool (4) from sliding away laterally during a evolving cutting movement of the cutting tool (4) about the corrugated tube (100).

2. Device according to Claim 1, **characterized in that** the setting means (6) are formed by a screw mechanism which can be externally actuated.

3. Device according to Claim 1 or 2, **characterized in that** the stop means (5) are arranged on the basic body (8; 8').

4. Device according to one of the preceding claims, **characterized in that** the stop means (5) are mounted on the basic body (8; 8') so as to be movable in the axial direction with respect to the axis (2).

5. Device according to one of the preceding claims, **characterized in that** the stop means (5) have two stop surfaces (9, 10) which, in the machining position, can be selectively brought against mutually oppositely directed flanks of corrugations, in particular of adjacent corrugations.

6. Device according to one of the preceding claims, **characterized in that** the stop means (5) are formed by an outwardly protruding projection (11) of a supporting and/or guiding element (12) which serves as a support and/or guide for the corrugated tube (100) and which is movable axially with respect to the axis (2).

7. Device according to Claim 6, **characterized in that** the supporting and/or guiding element (12) is arranged coaxially to a clamping element (13) of the clamping device (3).

8. Device according to Claim 6 or 7, **characterized in that** the supporting and/or guiding element (12) is rotatably mounted on a threaded bolt (15) which, for movement in the axial direction with respect to the axis (2), interacts with a mating thread (16) of the basic body (8; 8').

9. Device according to one of Claims 6 to 8, **characterized in that** the supporting and/or guiding element (12) is formed by a rotatable roller, and the projection (11) is preferably formed by an outwardly protruding collar.

10. Device according to one of Claims 6 to 9, **characterized in that** the supporting and/or guiding element (12) is a metal part, in particular an aluminium part.

11. Device according to one of the preceding claims, **characterized in that** the clamping device (3) has at least one clamping element (14) which is movable substantially radially with respect to the axis (2) and which is formed by the cutting tool (4).

12. Device according to one of the preceding claims, **characterized in that** a joint means (27) is provided by means of which the cutting tool (4) can be brought into a predeterminable oblique position with respect to the axis (2).

13. Device according to Claim 12, **characterized in that** the joint means (27) is formed by a rotary joint which is arranged on the basic body (8') and by means of which a part (29) of the basic body (8') that holds the cutting tool (4) can be brought into a predetermined angular position with respect to a part (30), which holds at least one clamping element (14, 15) of the clamping device (3), about a pivot axis (28) which extends substantially transversely with respect to the axis (2).

## Revendications

1. Dispositif (1 ; 1') pour la découpe en longueur de tubes ondulés, muni d'un corps de base (8 ; 8') comprenant une partie de saisie (7), muni d'un appareil de serrage (3) agissant radialement par rapport à un axe (2) pour la fixation d'un tube ondulé (100) dans une position d'usinage, muni d'un outil de coupe (4), qui est amené ou peut être amené dans la position d'usinage contre le tube ondulé (100) en position active, de telle sorte qu'une séparation soit réalisée par déplacement de l'outil de coupe (4) et du tube ondulé (100) l'un par rapport à l'autre, et muni de moyens de butée (5) pouvant entrer en prise dans un creux (110) du tube ondulé (100), qui comprennent au moins une surface de butée (9) en tant que butée contre un flanc d'une ondulation du tube ondulé (100), l'appareil de serrage (3) comprenant au moins trois éléments de serrage (13, 14, 15), qui sont agencés sur le corps de base (8 ; 8') et agissent dans la position d'usinage sur la périphérie du tube ondulé (100), un des éléments de serrage (13, 14, 15) étant monté de manière mobile par translation sur le corps de base (8 ; 8'), afin d'être déplacé à partir d'une position de départ contre lesdits au moins deux autres éléments de serrage (14, 15), et lesdits au moins deux autres éléments de serrage (14, 15) étant configurés sous la forme d'un rouleau et étant situés à un écart l'un de l'autre, de telle sorte qu'ils servent de logement pour le tube ondulé (100), afin de disposer le tube ondulé (100) sur ceux-ci du côté de la périphérie, dans la position d'usinage du tube ondulé (100), l'écart entre les moyens de butée (5) et l'outil de coupe (4) pouvant être modifié dans la direction axiale par rapport à l'axe (2), afin d'amener dans la position d'usinage du tube ondulé (100) ladite au moins une surface de butée (9) en appui contre un flanc d'une ondulation du tube ondulé (100), **caractérisé en ce que** les moyens de butée (5) coopèrent avec des moyens d'ajustement (6), par lesquels, dans la position d'usinage du tube ondulé (100), les moyens de butée (5) peuvent être ajustés au niveau de leur écart par rapport à l'outil de coupe (4) dans la direction axiale par rapport à l'axe (2), de telle sorte que ladite au moins une surface de butée (9) se trouve contre un flanc d'une ondulation du tube ondulé (100) et serve de guidage forcé pour le tube ondulé (100), afin d'empêcher un dérapage latéral de l'outil de coupe (4) lors d'un mouvement de coupe périphérique de l'outil de coupe (4) autour du tube ondulé (100).

2. Dispositif selon la revendication 1, **caractérisé en ce que** les moyens d'ajustement (6) sont formés par un mécanisme de vissage, qui est actionnable depuis l'extérieur.

3. Dispositif selon la revendication 1 ou 2, **caractérisé en ce que** les moyens de butée (5) sont agencés sur le corps de base (8 ; 8').

4. Dispositif selon l'une quelconque des revendications précédentes, **caractérisé en ce que** les moyens de butée (5) sont montés de manière mobile dans la direction axiale par rapport à l'axe (2) sur le corps de base (8 ; 8').

5. Dispositif selon l'une quelconque des revendications précédentes, **caractérisé en ce que** les moyens de butée (5) comprennent deux surfaces de butée (9, 10), qui peuvent être amenées dans la position d'usinage au choix contre des flancs d'ondulations orientés à l'opposé l'un de l'autre, notamment d'ondulations voisines.

6. Dispositif selon l'une quelconque des revendications précédentes, **caractérisé en ce que** les moyens de butée (5) sont formés par une protubérance en saillie vers l'extérieur (11) d'un élément de support et/ou de guidage (12) servant de support et/ou de guidage pour le tube ondulé (100), qui est mobile axialement par rapport à l'axe (2).

7. Dispositif selon la revendication 6, **caractérisé en ce que** l'élément de support et/ou de guidage (12) est agencé coaxialement par rapport à un élément de serrage (13) de l'appareil de serrage (3).

8. Dispositif selon la revendication 6 ou 7, **caractérisé en ce que** l'élément de support et/ou de guidage (12) est monté de manière rotative sur un boulon fileté (15), qui coopère pour le mouvement dans la direction axiale par rapport à l'axe (2) avec un contre-filetage (16) du corps de base (8 ; 8').

9. Dispositif selon l'une quelconque des revendications 6 à 8, **caractérisé en ce que** l'élément de support et/ou de guidage (12) est formé par un rouleau mobile en rotation et la protubérance (11) est de préférence formée par un col en saillie vers l'extérieur.

10. Dispositif selon l'une quelconque des revendications 6 à 9, **caractérisé en ce que** l'élément de support et/ou de guidage (12) est une partie métallique, notamment une partie en aluminium.

11. Dispositif selon l'une quelconque des revendications précédentes, **caractérisé en ce que** l'appareil de serrage (3) comprend au moins un élément de serrage (14) mobile essentiellement radialement par rapport à l'axe (2), qui est formé par l'outil de coupe (4) .

12. Dispositif selon l'une quelconque des revendications précédentes, **caractérisé en ce qu'**un moyen d'articulation (27) est prévu, par lequel l'outil de coupe (4) peut être amené dans une position inclinée prédéterminable par rapport à l'axe (2).

13. Dispositif selon la revendication 12, **caractérisé en ce que** le moyen d'articulation (27) est formé par une articulation rotative agencée sur le corps de base (8'), par laquelle une partie (29) du corps de base (8') maintenant l'outil de coupe (4) peut être amenée dans une position angulaire prédéterminée autour d'un axe de pivotement (28) essentiellement perpendiculaire à l'axe (2) par rapport à une partie (30) maintenant au moins un élément de serrage (14, 15) de l'appareil de serrage (3).
